# FASCICULE DE BREVET EUROPEEN

(11) **EP 2 570 353 B1**
(45) Date de publication et mention de la délivrance du brevet: **30.03.2016**
(21) Numéro de dépôt: 12184338.7
(22) Date de dépôt: 13.09.2012
(51) Int. Cl.: B65B 69/00, A45C 13/10, B65D 33/16, B65D 33/28, B65D 90/56, F16G 11/14

(54) **Système de fermeture et/ou d'ouverture d'emballage**
Schließ- und Öffnungssystem einer Verpackung
System for closing and/or opening packaging

(30) Priorité: 16.09.2011 WO PCT/IB2011/054055
(43) Date de publication de la demande: 20.03.2013
(73) Titulaire: EcoWaste SA, 1123 Aclens (CH)
(72) Inventeur: Pineau, Mathias, 1313 Ferreyres (CH)
(74) Mandataire: Grosfillier, Philippe

(56) Documents cités:
- WO-A1-2007/052328
- DE-U1-202010 004 704
- JP-A- 2002 362 680
- US-A- 2 858 051

## Description

### Domaine de l'invention

L'invention se situe dans le domaine de la fermeture et/ou de l'ouverture d'objets souples de forme tubulaire.

Elle s'applique en particulier, mais pas exclusivement, aux sacs du type « Big Bag ».

L'invention se rapporte également aux mécanismes de préhension, p.ex. du type Kinshofer, qui peuvent être utilisés pour manipuler des sacs de grande capacité.

### Description générale de l'invention

La présente invention concerne un ensemble comprenant un système de fermeture et/ou d'ouverture tel que défini dans les revendications.

Elle concerne également une utilisation de cet ensemble.

La présente invention concerne un ensemble comprenant un système de fermeture et/ou d'ouverture de section de corps tubulaire souple comprenant deux éléments de forme identique, chacun desdits éléments étant principalement constitué d'une partie filiforme souple comportant une pièce de guidage vers l'une de ses extrémités, la pièce de guidage du 1^{er} élément étant traversée par la partie filiforme du 2^{e} élément et vice-versa pour former un anneau de forme variable, un sac comportant une ouverture souple de forme tubulaire entourée par ledit anneau, et deux gaines souples dans lesquelles passent chaque partie filiforme souple.

Selon un premier mode de réalisation, la pièce de guidage est une boucle.

Selon un deuxième mode de réalisation de l'invention, la pièce de guidage comprend une poulie. Plus précisément, la poulie est fixée à l'extrémité de la 1^{ere} partie filiforme, de manière à ce que la 2^{e} partie filiforme coulisse dans un passage qui est défini entre la roue de la poulie et l'extrémité de la 1ere partie filiforme.

Bien évidemment, l'invention ne se limite pas à l'usage d'une poulie ou d'une boucle. Tout autre système équivalent permettant de faire coulisser la partie filiforme et d'atteindre l'objectif visé peut être utilisé dans le cadre de l'invention.

L'invention est particulièrement destinée à des sacs dont l'ouverture forme un corps tubulaire souple.

Elle peut être avantageusement utilisée avec des sacs de type « Big Bag » dont le contenu est important et qui se distinguent notamment par une ouverture sur le bas. Cette disposition de l'ouverture facilite considérablement la vidange du sac.

L'invention concerne également l'utilisation d'un mécanisme de préhension, par exemple du type Kinshofer, en association avec un ensemble tel que défini dans les revendications. Au moins une partie filiforme telle que corde faisant partie dudit ensemble active, lorsqu'elle se déplace, un mécanisme d'actionnement, par exemple la fermeture ou l'ouverture d'un sac.

### Description détaillée de l'invention

L'invention sera mieux comprise au moyen de la description détaillée ci-dessous qui comprend quelques exemples non-limitatifs.

### Brève description des figures

La figure 1 représente de manière schématique le mécanisme de fermeture/ouverture selon l'invention.
La figure 2 illustre le mécanisme de la figure 1 associé à un sac.
La figure 3 représente un premier mode de réalisation de l'invention.
La figure 4 représente un deuxième mode de réalisation de l'invention.
La figure 5 représente le mode de réalisation de la figure 4 mais sans sac.
La figure 6 illustre un mécanisme de Kinshofer pouvant être utilisé dans le cadre de l'invention.
La figure 7 représente un mécanisme de Kinshofer combiné à un ensemble de fermeture/ouverture selon l'invention.
La figure 8 illustre un système de sécurité qui peut être utilisé dans le cadre de l'invention.

### Références numériques utilisées dans les figures

1. Sac
2. Partie filiforme 1^{er} élément
3. Partie filiforme 2^{e} élément
4. Boucle 1^{er} élément
5. Boucle 2^{e} élément
6. Structure portante
7. Anneau souple de diamètre variable
8. Boucle
9. Sens d'ouverture
10. Sens de fermeture
11. Gaine 1^{er} élément
12. Gaine 2^{e} élément
13. Embout supérieur 1^{er} élément
14. Embout supérieur 2^{e} élément
15. Embout inférieur 1^{er} élément
16. Embout inférieur 2^{e} élément
17. Poulie de renvoi
18. Anneau rigide
19. Boîtier
20. Champignon creux
21. Support
22. Champignon coulissant
23. Mécanisme de Kinshofer
24. Châssis
25. Double poulie
26. Châssis
27. Double taquet
28. Double poulie
29. Câble intermédiaire
30. Poulie
31. Châssis
32. Poulie
33. Châssis
34. Câble
35. Poulie
36. Châssis
37. Poulie fixe
38. Champignon coulissant
39. Châssis
40. Système sécurité
41. Cordage
42. Leviers
43. Ressorts
44. Axes
45. Course
46. Champignon coulissant
47. Sens de force
48. Goupilles
49. Triangle
50. Câble
51. Câble
52. Gaine
53. Levier
54. Levier
55. Structure
56. Ressort

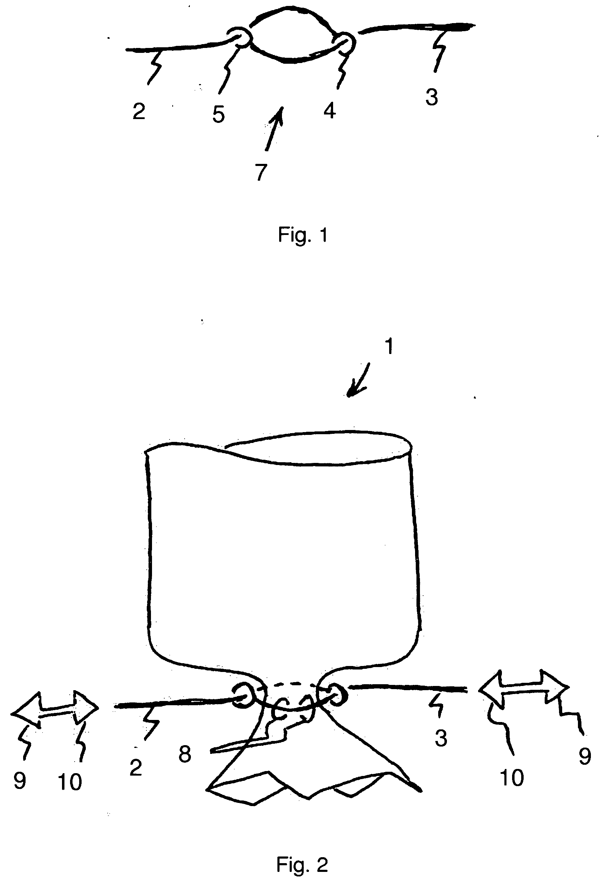

La figure 1 illustre le principe d'un système de fermeture et/ou d'ouverture selon l'invention. Le système de fermeture et/ouverture comprend deux éléments identiques constituées chacun d'une partie filiforme (2,3) avec une boucle (4,5) formée à l'une de ses extrémités. Chaque boucle (4,5) est traversée par la partie filiforme (2,3) de l'autre élément. Cet assemblage d'éléments coulissants (2-5) défini un anneau souple de diamètre variable (7) qui peut être placé p.ex. à l'extérieur d'un sac (1, voir figure 2). L'assemblage peut être fixé au sac (1) par des boucles (8) cousues tout autour du sac (1). Le poids du contenu du sac (1) agit comme force d'ouverture de l'anneau souple de diamètre variable (7) lorsque les éléments (2-5) sont relâchés (10). Une aide à l'ouverture telles que des nervures en composite peut être nécessaire en cas de contenu léger. Le fait de tirer (9) sur les deux éléments (2-5) ensemble exerce une force sur l'anneau de diamètre variable (7) et donc réduit l'ouverture du sac (1) de manière à prévenir la chute de son contenu. La combinaison de ce double cordage permet pour un déplacement de chaque partie filiforme (2,3), de faire une ouverture sur la circonférence de l'ouverture du sac équivalente à 2d.

Ce principe présente notamment l'avantage d'éviter de positionner le manipulateur sous le sac (1) lorsqu'il doit l'ouvrir ou le fermer. Il peut ainsi rester dans l'habitacle de son véhicule ou de sa grue pour commander le cycle entier de la vidange.

### Exempte 1 : Prise de force du cordage en appui sur le sac

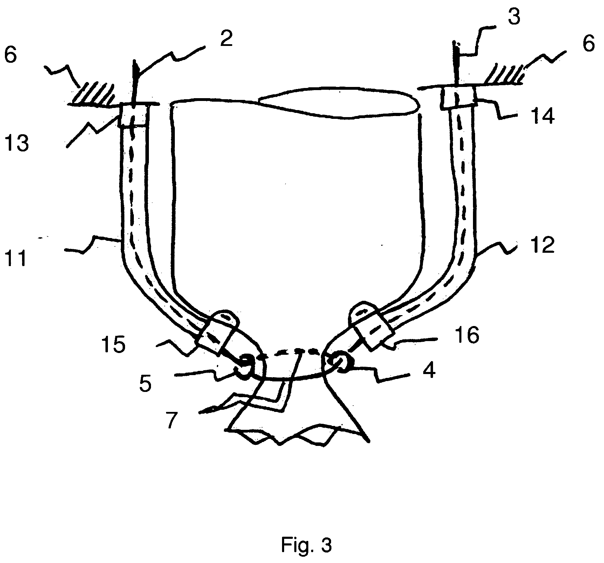

Dans cette variante (voir figure 3), en conservant le principe de fermeture décrit précédemment, chaque partie filiforme (2,3) passe à travers la boucle (4,5) de l'autre élément à l'intérieur d'une gaine souple (11,12) non compressible longitudinalement qui est fixée au bas du sac (1) par un embout (15,16) et en haut par un autre embout (13,14) sur une structure portante (6). La boucle (4,5) peut, par exemple, être intégrée dans l'embout (15,16) opposé. Lors du serrage, les embouts (15,16) se rapprochent du centre. La construction est identique pour les deux chemins de corde. Lors de la libération des parties filiformes (2,3), le poids du contenu écarte l'ouverture, éloigne les embouts (15,16), et desserre ainsi l'anneau souple (7) défini par les parties filiformes (2,3). Dans cette variante ainsi quand dans les autres variantes selon l'invention, les parties filiformes (2,3) sont de préférence des cordes ou des câbles métalliques.

### Exemple 2 : Prise de force du cordage en appui sur un anneau

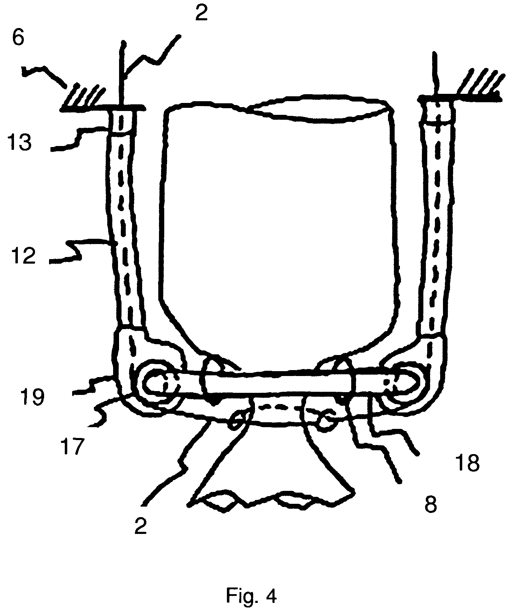

Dans cette variante (voir figure 4), en conservant le principe de fermeture décrit précédemment, chaque partie filiforme (2,3) passe par une poulie de renvoi (17) fixée sur un anneau solide (18). La poulie (17) est prise dans un boîtier (19) qui sert d'embout à une gaine souple (12) non compressible longitudinalement dans laquelle l'élément filiforme (2) remonte. La gaine (12) est fixée au niveau de sa partie supérieure en haut par un embout (13) sur la structure portante (6). La construction est identique pour les deux chemins de partie filiforme. L'anneau solide (18) sert d'appui à la force de serrage. Il est maintenu en position par rapport au sac (1) p.ex. au moyen de boucles cousues (8) sur le sac (8). Lors de la libération des parties filiformes (2,3), le poids du contenu ouvre le sac (1) et déplace les parties filiformes (2,3) dans le sens inverse.

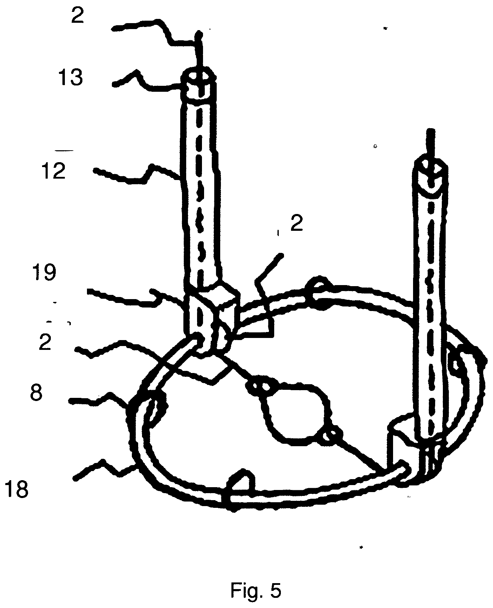

La figure 5 illustre cette même variante mais sans le sac.

### Exemple 3 : Utilisation d'un mécanisme de préhension de type "Kinshofer"

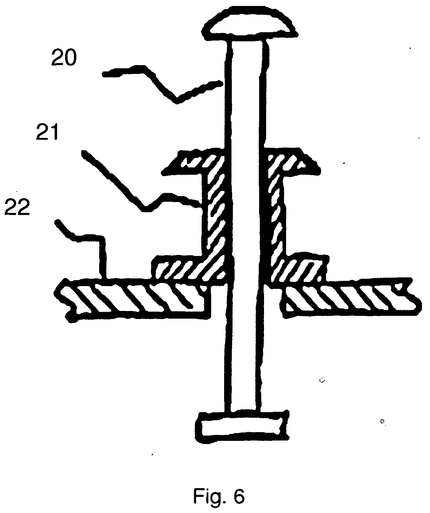

Le mécanisme de type Kinshofer (voir figure 6) consiste en une pièce en forme de champignon creux (20) fixé sur un support (21) du système entier destiné à bouger (partie mobile contenant le contenu). A l'intérieur est monté un champignon coulissant (22) dans les limites données par des butées (course d'environ 450mm). Le vidangeur possède une grue au bout de laquelle est fixé un appareillage spécial (pince Kinshofer) capable de saisir le champignon creux (22) et d'actionner le champignon coulissant (22) relativement au premier le long de sa course. Ce déplacement relatif des champignons (20, 22) est transmis aux éléments filiformes (2,3) et agit donc sur l'ouverture, respectivement la fermeture, du sac (1).

Il va de soi que l'invention ne se limite pas à ce seul type de préhension mais qu'elle s'applique à tout mécanisme de préhension adapté à ce domaine d'application (p.ex. préhension par double crochet, ...).

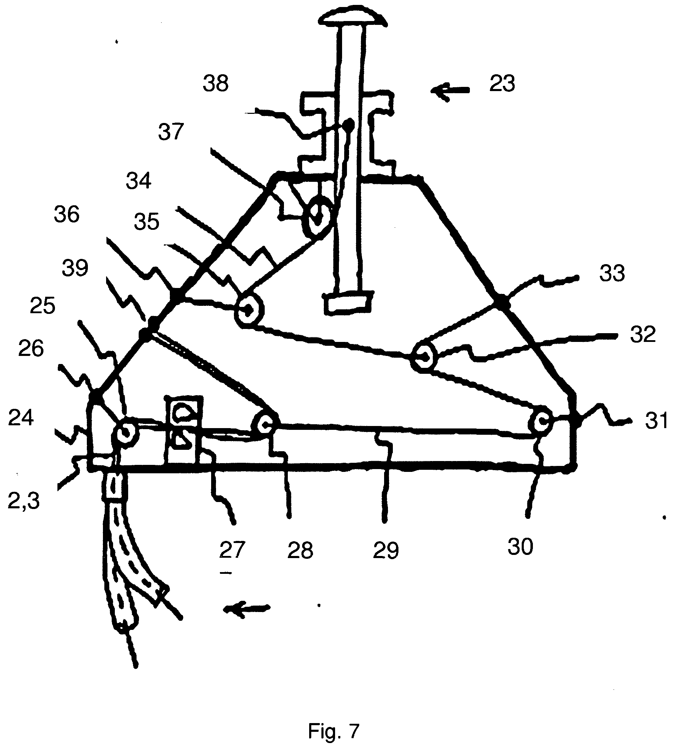

La variante de la figure 7 représente un mécanisme de Kinshofer (23) en haut et un système selon l'invention en bas. L'objectif est de lier le mouvement d'environ 45 cm du champignon intérieur du système de préhension Kinshofer avec une course nécessaire et suffisante aux deux cordages du système d'ouverture/fermeture pour l'actionner.

Le principe suit celui d'un moufle de voilier inversé. Les deux cordages (2,3) pilotant la fermeture-ouverture du sac sont réunis en une extrémité du châssis en boîte (24), pour coupler leur commande par ce système de transfert. Leur direction est corrigée à l'horizontal par une double poulie (25) fixée au châssis (26), ils traversent un double taquet piloté (27) permettant le blocage en des moments précis du cycle de vidange. Ils sont pris ensuite par une seconde double poulie (28) et se fixent sur le châssis (39). La double poulie (28) est tenue, par exemple, par un câble intermédiaire (29), renvoyé par une poulie (30) fixée au châssis (31). Une autre poulie (32) saisit ce câble (29) qui se fixe sur le châssis (33). La poulie (32) est elle-même tenue par exemple, par un câble final (44), renvoyé à son tour par une poulie (35) fixée au châssis (36) puis orienté à la verticale par une dernière poulie fixe (37) pour se fixer dans le champignon mobile (38).

Lorsque le champignon (38) bouge d'environ 45cm, il tire sur le câble final (34) dont la course est multipliée par 2 sur le câble intermédiaire (29) par le jeu de poulies. A son tour, le câble intermédiaire (29) faisant donc une course de 90cm va créer un mouvement double de 1,8m sur le double cordage (2,3) par le jeu de poulies. Le mouvement est multiplié théoriquement par 4, la force donnée par la pince sur le champignon (38) est divisée par 4 sur le cordage. Les élongations de cordes et frottements réduisent ces valeurs théoriques.

Bien évidemment l'invention ne se limite pas aux variantes décrites dans la présente demande. Elle couvre également un mécanisme de préhension, p.ex. du type de type Kinshofer, combiné à tout système servant à déplacer un ou plusieurs éléments filiformes souples, ce ou ces éléments activant un mécanisme d'actionnement, p.ex. de fermeture et/ou d'ouverture tel que décrit précédemment.

On relèvera notamment que les dimensions du système selon l'invention peuvent être variées. Idem pour le choix des matériaux constituant le système.

### Exemple 4 : Ajout optionnel d'un système de sécurité de fermeture-ouverture d'un sac grande capacité

Ce système optionnel vise à sécuriser l'ouverture accidentelle du sac lorsqu'une grue soulève l'ensemble avec le sac plein sans avoir actionné correctement le système externe de commande, p.ex. de type Kinshofer.

### Cycle de vidange

Pour comprendre l'intérêt de cette sécurité, le cycle de vidange réalisé par l'ouvrier est brièvement décrit ci-après :

Situation de départ: la grue est montée d'un système de préhension (Kinshofer dans cet exemple) capable de saisir sur le conteneur un champignon mécanique fixe et un champignon central coulissant. Le champignon central actionne le système de fermeture: sorti il ferme le sac, rentré il l'ouvre. Au repos, le système de fermeture est donc détendu, champignon central en bas, mais le sac ne peut laisser s'échapper son contenu vu que son fond pose dans la cuve solide. Le sac ou le conteneur est ainsi rempli par ce qu'il doit contenir.
1. Le vidangeur arrive, il saisit le conteneur au sol via ces deux champignons avec sa pince Kinshofer au bout d'une grue.
2. Avant de le soulever, il actionne l'intérieur de sa pince Kinshofer pour qu'elle écarte les deux champignons l'un de l'autre. Le champignon central monte donc et il ferme ainsi le sac via le système de commande
3. Il soulève le tout au-dessus de sa benne récolteuse
4. Il actionne l'intérieur de sa pince Kinshofer pour qu'elle réunisse à nouveau les deux champignons l'un vers l'autre. Ceci détend le système de commande qui ouvre le sac pour la chute du contenu.
5. Il refait la fermeture (voir point 2)
6. Il redépose le conteneur avec son sac à son emplacement au sol
7. Il réunit à nouveau les champignons (voir point 4)
8. Il libère la pince des champignons, range sa grue et continue son tour.

Dans ce cycle, plusieurs situations doivent être assurées :
Soulever le sac alors que l'ouvrier ne l'a pas fermé (oublie le point 2) va laisser le contenu sortir par-dessous. Le système de sécurité doit empêcher cet oubli.
L'accumulation du poids du contenu écarte l'orifice de sortie du sac dans la cuve et, lorsque l'ouvrier arrive et tente de fermer le sac (point 2), la fermeture est gênée, voire resterait ouverte, laissant le contenu dans la cuve. Le système de sécurité doit assurer cette fermeture constante durant le remplissage.
Lorsque le sac est en l'air, l'actionnement du système de fermeture-ouverture doit être libre d'entrave afin de laisser l'ouvrier ouvrir et fermer librement le sac. Le système de sécurité est alors inopérant (durant points 4 et 5).

### Description du système de sécurité

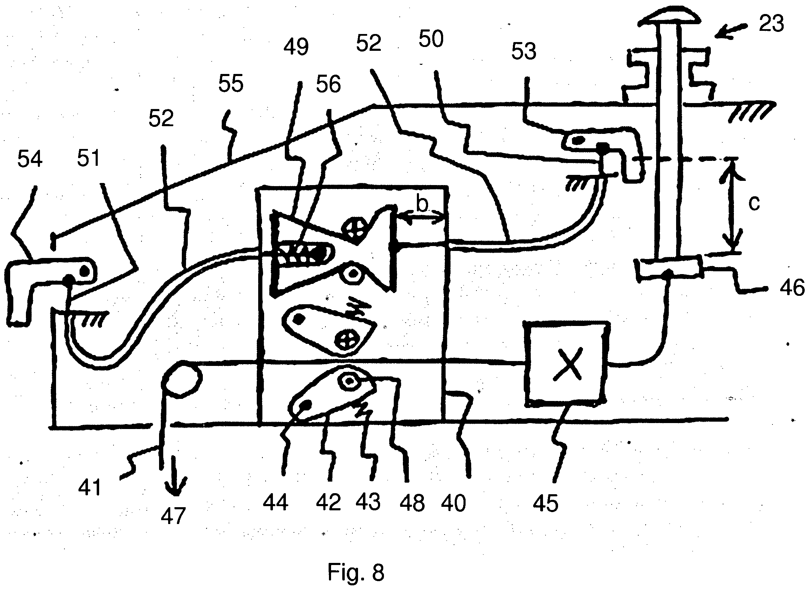

Le système de sécurité (40), voir figure 8, est composé d'un jeu de pièces capable de pincer ou bloquer le système de commande de fermeture-ouverture qu'en certains moments du cycle de vidange. Le cordage (41) passe entre deux leviers (42), par ex. des taquets, qui se referment face à face par des ressorts (43) en pinçant le cordage. Les axes (44) des leviers sont positionnés de façon à ce qu'une force (47) tendant à l'ouverture de l'orifice du sac provoque le serrement et bloque la course (45).

Les deux leviers sont agrémentés d'une goupille (8) qui permet de commander leur position. Ainsi en écartant les goupilles l'une de l'autre, les leviers s'écartent et libère le mouvement du cordage. Cette commande est réalisée par le triangle (9). La goupille marquée d'un plus dans la figure 8 se retrouve sur le flan haut du triangle, la goupille marquée d'un point est reportée sur le flan du bas. Ainsi lorsque le triangle (49) avance vers la droite, il écarte les goupilles (48) avec les leviers (42) et libère ainsi le cordage (41).

Le triangle est déplacé par des câbles (50, 51) guidés dans leur gaine (52), de type câble de vélo. Le câble de droite (50) est fixé sur le triangle d'un côté et sur un levier (53) à l'autre bout. Le mouvement du levier provoque le déplacement du câble (50) dans le sens droit de la course (b). Le même levier (54) se retrouve de l'autre côté et commande le câble (51) pour le mouvement vers la gauche du triangle (49). Le levier (51) présente son embout à l'extérieur de la structure (55) et est actionné par le bord de la partie fixée au sol du conteneur. Ainsi lorsque la structure (55) et le sac y attaché est posée au sol ou dans sa cuve, le levier (51) est poussé, tire le câble et déplace le triangle (49) à gauche. Ainsi au sol, si le champignon central est en bas, la détente du cordage est interdite par le système de sécurité (le point B est assuré). De même si l'ouvrier soulève sans actionner le champignon central en position de sac fermé (vers le haut), le système de sécurité maintiendra le cordage bloqué en position de fermeture (le point A est assuré). Il n'est pas contraint de refaire le cycle, car le système de sécurité ouvrira le cordage dès que le champignon central sera monté et prendra ainsi le contrôle de la fermeture-ouverture. Il pourra donc le faire au-dessus du lieu de vidange.

Le levier de droite (53) est quant à lui actionné lorsque le champignon central (46) est en butée supérieure à la suite de sa course (c). Ainsi lors de ce mouvement, le câble (50) est tendu, déplaçant le triangle (49) à droite libérant le cordage (1). Ce mouvement du champignon (46) tire le cordage (1) qui ferme le sac. Le système de sécurité est alors inopérant et laisse le champignon central commander le cordage et donc la fermeture-ouverture du sac (le point C est assuré).

Lors du cycle de vidange, au point 2 lorsque le champignon central (46) est monté alors que la structure (54) est toujours au sol ou dans sa cuve, les deux leviers (53, 54) sont actionnés en même temps. Dans ce cas, le champignon central doit avoir priorité puisque par sa position haute, l'ouvrier démontre qu'il contrôle la fermeture. Aussi le ressort (56) placé dans le triangle (49) permet à l'embout du câble (51) un mouvement relatif dans le triangle (49) et absorbe ainsi le contre ordre de ce levier (54).

Il convient de relever que l'invention concerne également tout mécanisme fonctionnant avec une seule corde.

## Revendications

1. Ensemble comprenant un système de fermeture et/ou d'ouverture de section de corps tubulaire souple comprenant deux éléments de forme identique, chacun desdits éléments étant principalement constitué d'une partie filiforme souple (2,3) comportant une pièce de guidage (4,5) vers l'une de ses extrémités, la pièce de guidage (4) du 1^{er} élément étant traversée par la partie filiforme (3) du 2^{e} élément et vice-versa pour former un anneau de forme variable, un sac (1) comportant une ouverture souple de forme tubulaire entourée par ledit anneau, et deux gaines souples (11, 12) dans lesquelles passent chaque partie filiforme souple.

2. Ensemble selon la revendication 1 dans lequel la pièce de guidage est une boucle (4,5).

3. Ensemble selon la revendication 1 dans lequel la pièce de guidage comprend une poulie.

4. Ensemble selon la revendication 1, lesdites gaines étant fixées au bas du sac et à une structure portante (6) à l'autre extrémité par des embouts (13,14,15,16).

5. Ensemble selon la revendication 1 dans lequel le sac est de type « Big Bag ».

6. Ensemble selon la revendication 1 comprenant un système de sécurité adapté de manière à bloquer de façon autonome le déplacement d'au moins une desdites parties filiformes.

7. Ensemble selon la revendication 1 comprenant un anneau solide (18) sur lequel est disposé le système de fermeture.

8. Ensemble selon la revendication 7 comprenant des moyens de fixation (8) adaptés de manière à fixer le sac (1) sur l'anneau solide (18).

9. Ensemble selon l'une des revendications 1 à 8 comprenant un mécanisme de préhension, par exemple du type Kinshofer, associé à au moins une partie filiforme telle que corde, cette dernière étant elle-même associée à un mécanisme d'actionnement.

10. Utilisation d'un mécanisme de préhension, par exemple du type Kinshofer, en association avec un ensemble selon l'une des revendications 1 à 8.

## Patentansprüche

1. Anordnung, umfassend ein System zum Schließen und/oder Öffnen eines Abschnitts eines flexiblen röhrenförmigen Körpers, das zwei Elemente mit identischer Form umfasst, wobei jedes der Elemente hauptsächlich aus einem flexiblen fadenförmigen Teil (2, 3) besteht, das ein Führungsteil (4, 5) zu einem seiner Enden hin umfasst, wobei das Führungsteil (4) des 1. Elements von dem fadenförmigen Teil (3) des 2. Elements durchquert wird, und umgekehrt, um einen Ring mit variabler Form zu bilden, einen Sack (1), der eine flexible röhrenförmige Öffnung umfasst, die von dem Ring umgeben ist, und zwei flexible Hülsen (11, 12), durch die jedes flexible fadenförmige Teil geht.

2. Anordnung nach Anspruch 1, wobei das Führungsteil eine Schlaufe (4, 5) ist.

3. Anordnung nach Anspruch 1, wobei das Führungsteil eine Riemenscheibe umfasst.

4. Anordnung nach Anspruch 1, wobei die Hülsen mittels Stutzen (13, 14, 15, 16) unten am Sack und am anderen Ende an einer Tragestruktur (6) befestigt sind.

5. Anordnung nach Anspruch 1, wobei es sich bei dem Sack um einen Sack der Big Bag-Art handelt.

6. Anordnung nach Anspruch 1, umfassend ein Befestigungssystem, das so ausgelegt ist, dass es die Verschiebung mindestens eines der fadenförmigen Teile autonom blockiert.

7. Anordnung nach Anspruch 1, umfassend einen massiven Ring (18), an dem das Schließsystem angeordnet ist.

8. Anordnung nach Anspruch 7, umfassend Befestigungsmittel (8), die so ausgelegt sind, dass der Sack (1) am massiven Ring (18) befestigt ist.

9. Anordnung nach einem der Ansprüche 1 bis 8, umfassend einen Greifmechanismus, beispielsweise der Kinshofer-Art, der mindestens einem fadenförmigen Teil wie einem Seil zugeordnet ist, wobei Letzteres selbst einem Betätigungsmechanismus zugeordnet ist.

10. Verwendung eines Greifmechanismus, beispielsweise der Kinshofer-Art, in Verbindung mit einer Anordnung nach einem der Ansprüche 1 bis 8.

## Claims

1. Assembly comprising a system for closing and/or opening the section of a flexible tubular body, comprising two elements of identical shape, each of said elements consisting mainly of a flexible filiform part (2, 3) having a guide piece (4, 5) towards one of its ends, the guide piece (4) of the first element being passed through by the filiform part (3) of the second element and vice versa so as to form a ring of variable shape, a bag (1) comprising a flexible opening of tubular shape surrounded by said ring, and two flexible sheaths (11, 12) through which each flexible filiform part passes.

2. Assembly according to Claim 1, wherein the guide piece is a loop (4, 5).

3. Assembly according to Claim 1, wherein the guide piece comprises a pulley.

4. Assembly according to Claim 1, wherein said sheaths are fixed to the bottom of the bag and to a supporting structure (6) at the other end by end pieces (13, 14, 15, 16).

5. Assembly according to Claim 1, wherein the bag is of the "big bag" type.

6. Assembly according to Claim 1, which comprises a safety system designed to autonomously prevent the movement of at least one of said filiform parts.

7. Assembly according to Claim 1, which comprises a solid ring (18) on which the closure system is disposed.

8. Assembly according to Claim 7, which comprises fixing means (8) designed to fix the bag (1) to the solid ring (18).

9. Assembly according to one of Claims 1 to 8, which comprises a gripping mechanism, for example of the Kinshofer type, associated with at least one filiform part such as a string, the latter itself being associated with an actuating mechanism.

10. Use of a gripping mechanism, for example of the Kinshofer type, in association with an assembly according to one of Claims 1 to 8.
